# EUROPEAN PATENT SPECIFICATION

(11) **EP 2 296 398 B1**
(45) Date of publication and mention of the grant of the patent: **28.09.2016**
(21) Application number: 10172618.0
(22) Date of filing: 12.08.2010
(51) Int. Cl.: H04W 24/08

(54) **Mobile station device, base station device, and radio communication system**
Mobilstationsvorrichtung, Basisstationsvorrichtung und Funkkommunikationssystem
Dispositif de station mobile, dispositif de station de base et système de communication radio

(30) Priority: 11.09.2009 JP 2009210990
(43) Date of publication of application: 16.03.2011
(73) Proprietor: Sony Corporation, Tokyo 108-0075 (JP)
(72) Inventor: Sakoda, Kazuyuki, Minato-ku Tokyo 108-0075 (JP); Morioka, Yuichi, Minato-ku Tokyo 108-0075 (JP)
(74) Representative: D Young & Co LLP

(56) References cited:
- EP-A1- 1 463 354
- WO-A1-96/07288
- WO-A1-99/33298
- WO-A1-2008/119892
- WO-A2-2009/069948
- FR-A1- 2 866 186
- US-A1- 2005 026 626
- US-A1- 2005 130 598
- US-A1- 2006 073 786
- US-A1- 2007 037 570
- US-A1- 2009 181 664
- US-A1- 2009 207 749

## Description

The present invention relates to a mobile station device, a base station device, and a radio communication system.

### (Data rate variation in cellular radio communication system)

In the case of performing data communication in a cellular radio communication system (hereinafter, may be simply referred to as "radio communication system"), it is general that a transmission band to be provided varies depending on the position where a mobile station device (hereinafter, may be simply referred to as "mobile station") is located. That is because, when the mobile station is located near a base station device (hereinafter, may be simply referred to as "base station"), high reception SNR (Signal to Noise ratio) can be expected, and hence, a modulation system which is capable of providing a high throughput such as 16QAM (Quadrature Amplitude Modulation) or 64QAM can be used, but on the other hand, when the mobile station is located far away from the base station, the mobile station has to communicate at low reception SNR, and hence is forced to use a low order modulation system such as BPSK (Binary Phase Shift Keying) or QPSK (Quadrature Phase Shift Keying). Under the circumstances where communication quality varies, there are proposed various methods as a methodology for avoiding stress imparted to users.

For example, there is disclosed a method in which communication quality confirmation data is distributed from a base station prior to start of communication and whether the communication quality is poor is determined before the communication (e.g., see JP-A-1999-127108). Further, there is disclosed a method in which a mobile station exchanges its position information and data rate estimation information with a base station and an estimate value of the data rate to be provided is displayed to a user (e.g., see JP-A-2002-353876).

In addition, there are known a system which distributes alarm information to a terminal station in the case where the communication quality may become poor during real-time communication (e.g., see JP-A-2006-352620), and a method of classifying distribution requests based on whether the requests are real-time service or not, and determining whether a network is capable of satisfying a distribution request (e.g., see JP-W-2008-536409).

### (Study on side of operator of cellular radio communication system)

On the other hand, it is important that data communication connection service providers arrange base stations in a manner that satisfies a user. Actually, radio wave propagation is largely influenced by buildings and the like, which is called shadowing, and hence, it is difficult to appropriately send radio waves to all the areas that the user visits even though, for example, the base stations are arranged at regular intervals. In many cases, there are places where no signal from any base stations is sent and places where too many signals are sent from multiple base stations and signals are interfered with each other, for example. It is necessary that the service providers arrange the base stations in such a manner to decrease those places as much as possible. For example, it is necessary that the service providers perform computational simulation on radio wave arrival state beforehand and investigate where to arrange the base stations (e.g., see JP-A-2001-94502 and JP-W-2004-510372).

However, although various methods are proposed as the methodology for avoiding stress imparted to the users under the circumstances where the communication quality varies as described above, it was difficult to essentially enhance the communication quality, and the degree which contributed to the improvement was small. Further, although the computational simulation on radio wave arrival state is performed beforehand and where to arrange the base stations is attempted to be investigated, there is a gap between the computational results output from the computer and the actuality, and hence, there occurs a problematic area. In addition, the information on which location the user performs massive data communication fluctuates dynamically, and therefore, there are limitations to the computational simulation.

Accordingly, when there is a deficit in the service area, it is necessary that the user call the service provider and complain "the connection was bad in such and such a place" to require improvement in service. Further, it is also necessary that the service provider take the trouble to respond to the complaint, confirm the degree of the content of the complaint by on-the-spot investigation, and examine whether or not to place a base station, and hence, in many cases, it took great efforts to build a satisfactory service area.

Other prior art includes US 2009/181664, WO 2008/119892, US 2005/130598, FR 2 866 186, US 2009/207749 and US 2007/037570, which describe various methods for monitoring and improving data networks.

In light of the foregoing, it is desirable to provide a novel and improved technology which enables to extract efficiently and automatically information on a location where a user carrying a mobile station device is dissatisfied with a service.

According to an embodiment of the present invention, there is provided a mobile station device which includes a reception section which receives a radio signal from a base station device, a communication information acquisition section which acquires, based on the radio signal received by the reception section, communication information which is information related to communication with the base station, a position information acquisition section which acquires position information indicating a position of the mobile station device, and a transmission section which transmits the position information acquired by the position information acquisition section and the communication information acquired by the communication information acquisition section to the base station device using a radio signal, wherein the communication information acquisition section measures communication quality of communication with the base station using a radio signal, and acquires communication quality information indicating the measured communication quality as the communication information, and wherein the communication information acquisition section acquires a data amount contained in a radio signal received from the base station device by the reception section and a time at which the radio signal is received, calculates, based on the acquired data amount and the acquired time, a reception average throughput, and measures the calculated reception average throughput as the communication quality.

When it is determined that the communication quality information is higher than a threshold, the communication information acquisition section may not acquire the communication quality information as the communication information. The transmission section may not transmit the position information and the communication information to the base station device.

The communication information acquisition section may measure, as the communication quality, a received power strength of a radio signal which is received from the base station device by the reception section or a signal-to-interference-noise ratio of the radio signal.

The mobile station device may further include an input section which accepts input of communication quality information from a user. The communication information acquisition section may acquire the communication quality information as the communication information, the input of the communication quality information from the user being accepted by the input section.

The position information and the communication quality information transmitted to the base station device by the transmission section may be transmitted to a data management device by the base station device, and may be used for the data management device to specify a position at which the communication quality is poor based on pieces of the position information and pieces of the communication quality information transmitted from a plurality of the base station devices.

When the mobile station device adds mobile station identification information, which is information for identifying the mobile station, to at least one of the position information and the communication information and transmits the position information and the communication information to the base station device, the mobile station identification information may be deleted by the base station device and then the position information and the communication information may be transmitted to the data management device.

The mobile station device may further include a storage section and a retransmission control section which causes the storage section to store the position information and the communication information when the transmission section is incapable of transmitting the position information and the communication information using a radio signal, and which acquires the position information and the communication information from the storage section when it is detected that communication with the base station device becomes possible. The transmission section may transmit the position information and the communication information acquired by the retransmission control section to the base station device using a radio signal.

When the transmission section transmits the position information and the communication information to the base station device using a radio signal, a charge imposed on a user of the mobile station device for communication between the mobile station device and the base station device using a radio signal may be reduced.

The communication information acquisition section may extract frequency channel information indicating a frequency channel used for communication with the base station device from the radio signal received by the reception section, and may acquire the extracted frequency channel information as the communication information.

The communication information acquisition section may measure, as communication quality, the received power strength of a radio signal which is received from the base station device by the reception section or the signal-to-interference-noise ratio of the radio signal, and may further acquire communication quality information indicating the measured communication quality. The transmission section may further transmit the communication quality information to the base station device using a radio signal.

The position information and the frequency channel information transmitted from the base station device by the transmission section may be transmitted to a data management device by the base station device, and may be used for the data management device to specify, based on pieces of the position information and pieces of the frequency channel information transmitted from a plurality of the base station devices, a position at which a radio signal transmitted from the base station device is received for each of the pieces of the frequency channel information.

According to the embodiments of the present invention described above, it becomes possible to extract efficiently and automatically information on a location where a user carrying a mobile station device is dissatisfied with a service.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:
FIG 1 is a diagram showing a configuration example of a radio communication system according to a first embodiment of the present invention;
FIG. 2 is a diagram showing an example of usage of a frequency resource according to the embodiment;
FIG. 3 is a summarized diagram of signal types transmitted by a base station according to the embodiment;
FIG. 4 is a diagram illustrating a weak signal area and an intercell interference area;
FIG. 5 is a diagram showing a hardware configuration of a mobile station according to the first embodiment of the present invention;
FIG 6 is a diagram showing a functional configuration of the mobile station according to the embodiment;
FIG. 7 is a diagram showing a hardware configuration of the base station according to the embodiment;
FIG. 8 is a diagram showing a functional configuration of the base station according to the embodiment;
FIG. 9 is a flowchart showing a flow of processing executed by the mobile station according to the embodiment;
FIG. 10 is a flowchart showing a flow of processing from the start to the end of a session;
FIG. 11 is a diagram showing a configuration example of a radio communication system in which a data management device is present;
FIG 12 is a diagram showing a configuration example of a packet; and FIG. 13 is a diagram showing a configuration example of a radio communication system in which a relay station is present.

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

Note that the description will be given in the following order.

### 1. First embodiment

1-1. Outline of radio communication system according to present embodiment
1-2. Weak signal area and intercell interference area
1-3. Hardware configuration of mobile station
1-4. Functional configuration of mobile station
1-5. Hardware configuration of base station
1-6. Functional configuration of base station
1-7. Processing in mobile station (measurement and notification of communication quality)
1-8. Other example of processing in mobile station
1-9. Description on session
1-10. Processing in mobile station (measurement and notification of frequency channel in use)
1-11. Processing in network side (aggregate of communication quality)
1-12. Processing in network side (measurement and notification of frequency channel in use)
1-13. Link with charging
2. Modified example
3. Summary

### <1. First embodiment>

### [1-1. Outline of radio communication system according to present embodiment]

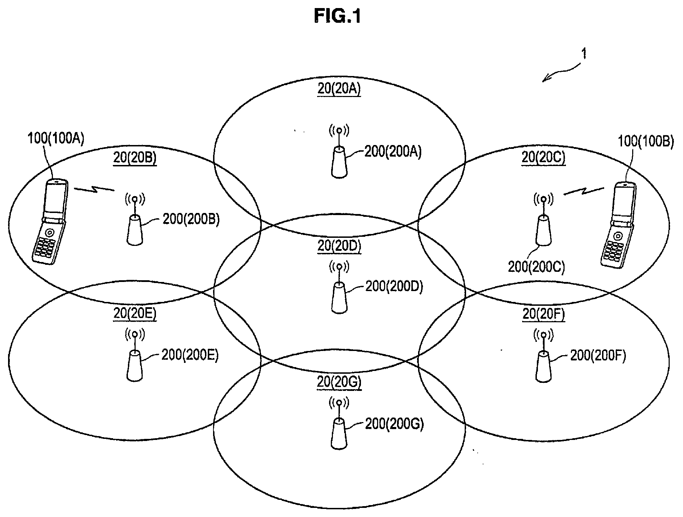

FIG. 1 is a diagram showing a configuration example of a radio communication system according to a first embodiment of the present invention. As shown in FIG. 1, it is known as a cellular radio communication system that a system in which a mobile station 100 wirelessly communicates with a base station 200 which is installed on a rooftop of a building or the like and a base station 200 connects to an outside network 40. A so-called cellular phone system is one example of the cellular radio communication system.

In a radio communication system 1, a service provider installs many base stations 200 and develops service areas in such a manner that the mobile station 100 can connect to the base station 200 wherever the mobile station 100 is located. This state is shown in FIG. 1. In FIG. 1, a service area 20 represents an area within which communication with the base station 200 is assumed to be performed. The area which can provide a service to the base station 200 is referred to as, for example, cell. When the mobile station 100 is located, for example, within a service area 20E and a service area 20D, the mobile station 100 is connected to a base station 200E and a base station 200D, respectively. In this way, by changing the base stations 200 to be connected to depending on the place at which the mobile station 100 is located, the connection between the mobile station 100 and the base station 200 is not interrupted even in the case where the mobile station 100 is transferred.

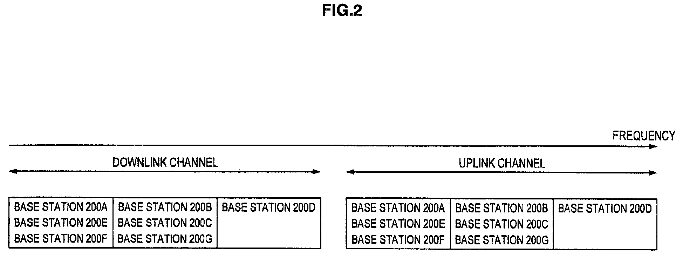

In the system, at the edge of the service area 20, the mobile station 100 can receive signals from multiple base stations 200. For this reason, there is a case where respective base stations 200 are arranged in such a manner that service areas 20 provided with services from base stations 200 using the same frequency channel do not overlap with each other. This example will be described with reference to FIG. 2.

FIG. 2 is a diagram showing an example of usage of a frequency resource, which schematically shows the way in which the frequency resource allocated to a service provider is used. In most of the radio communication systems 1, there is adopted a mode called FDD (Frequency Division Duplex), in which different frequency bands are allocated to an uplink channel (channel in a direction from the mobile station 100 to the base station 200) and a downlink channel (channel in a direction from the base station 200 to the mobile station 100). In addition, the uplink channel and the downlink channel are each further compartmentalized, and in a certain base station 200, a frequency channel is allocated such that only a part thereof is used. Accordingly, by systematically arranging the base stations 200 in such a manner that the same frequency band is not shared between the base stations 200 placed adjacently to each other, the system is controlled not to cause interference.

Information on the radio communication system 1 is described in detail in, for example, "Digital Mobile Communication" ISBN-4-905577-26-8, supervising editor: Moriji Kuwabara, so please refer to those documents for detail. A base station 200 transmits/receives a signal necessary for the communication with the mobile station 100 within a frequency band whose availability in the base station 200 is preliminarily set.

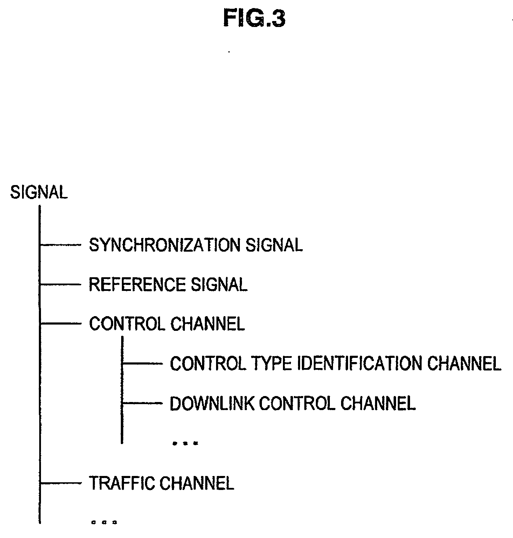

FIG. 3 is a summarized diagram of signal types transmitted by a base station. First, the base station 200 transmits a synchronization signal at regular intervals to the mobile station 100 for the purpose of notifying the mobile station 100 that the base station 200 is present and also notifying the mobile station 100 of a reference time of the base station 200. By receiving the synchronization signal, the mobile station 100 detects that the base station 200 is present in the periphery thereof, and extracts information on timing at which the signal is to be received in order to receive a control signal.

Further, the base station 200 transmits a reference signal at regular intervals in a known pattern, and the reference signal is used for estimating a transmission path of a symbol in which information is modulated. In addition, the base station 200 transmits a control channel for notifying the mobile station 100 of control information. The control channel is a signal that can be demodulated and received depending on timing information obtained from the synchronization signal and the transmission path estimation results obtained from the reference signal. The mobile station 100 can extract brief information of the base station 200 by receiving the control channel.

As the control channel, there are defined multiple kinds of control channels, and the mobile station 100 first receives a control type identification channel to thereby obtain basic information on which frequency band and at which timing the control channel is transmitted in that cell. In accordance with the basic information, the mobile station 100 receives a downlink control channel. Accordingly, the mobile station 100 acquires a system parameter and the like, and determines whether it is possible to communicate with the base station 200 and whether to perform communication, for example. In the case where the mobile station 100 actually communicates with the base station 200, the mobile station 100 notifies the base station 200 of a traffic channel allocation request, and a traffic channel is allocated to the mobile station 100 from the base station 200.

Signal formats used in the radio communication system 1 are described in, for example, 3GPP TS 36.211 (3rd Generation Partnership Project; Technical Specification Group Radio Access Network; Evolved Universal Terrestrial Radio Access (E-UTRA); Physical Channels and Modulation), and 3GPP TS 36.213 (3rd Generation Partnership Project; Technical Specification Group Radio Access Network; Evolved Universal Terrestrial Radio Access (E-UTRA); Physical layer procedures), so please refer to those documents for detail.

### [1-2. Weak signal area and intercell interference area]

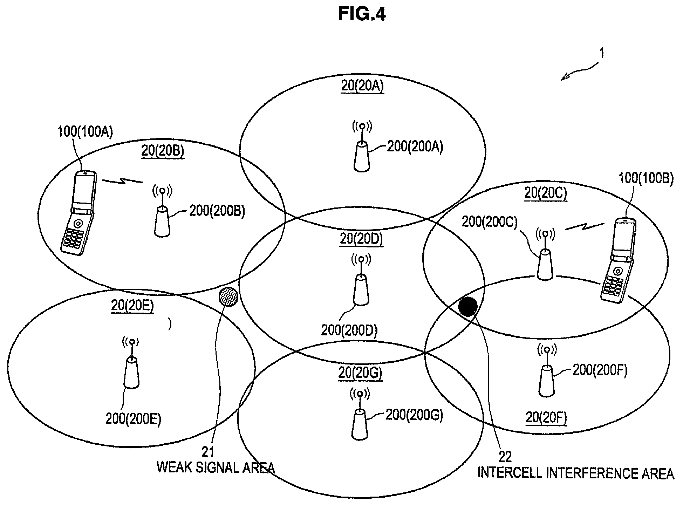

FIG. 4 is a diagram illustrating a weak signal area and an intercell interference area. As described above, it is important that data communication connection service providers arrange base stations 200 in a manner that satisfies a user. Actually, radio wave propagation is largely influenced by buildings and the like, which is called shadowing, and hence, it is difficult to appropriately send radio waves to all the areas that the user visits even though, for example, the base stations 200 are arranged at regular intervals. In many cases, there are places where no signal from any base stations 200 is sent (e.g., a weak signal area 21 shown in FIG. 4) and places where too many signals are sent from multiple base stations and signals are interfered with each other (e.g., an intercell interference area 22 shown in FIG. 4), for example. It is necessary that the service providers arrange the base stations 200 in such a manner to decrease those places as much as possible.

### [1-3. Hardware configuration of mobile station]

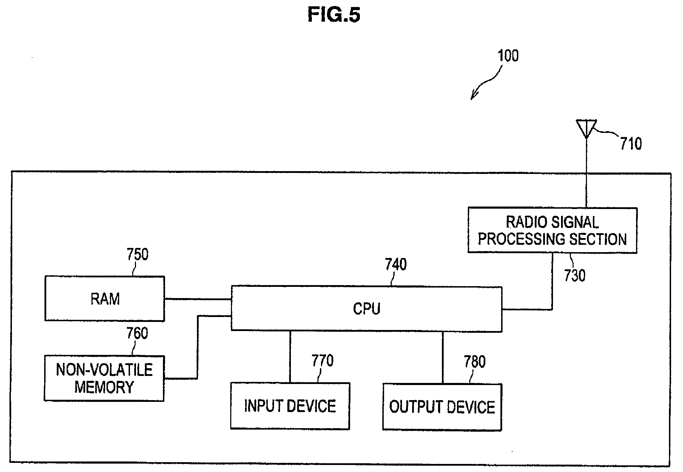

FIG. 5 is a diagram showing a hardware configuration of a mobile station according to the first embodiment of the present invention. With reference to FIG. 5, the hardware configuration of the mobile station according to the present embodiment will be described. Typically, there is assumed a form like a cellular phone terminal for the mobile station 100, but the mobile station 100 is not limited to the cellular phone terminal. The mobile station 100 includes a radio signal processing section 730. The radio signal processing section 730 is a module for performing signal processing for communicating with the base station 200 and signal processing necessary for performing communication indicating which base station 200 or which provider's network the mobile station 100 is to be connected to. The signal processed by the module is transmitted to/received from the base station 200 which is a communication partner, via an antenna 710.

The mobile station 100 includes a non-volatile memory 760. The mobile station 100 further includes a CPU 740. A signal transmitted/received via the radio signal processing section 730 and a signal retrieved from the non-volatile memory 760 are subjected to digital signal processing in the CPU 740, and for example, the signals are each treated as a signal processed into various forms such as image information. The signal is output from the output device 780 (such as a display and a speaker). Further, the CPU 740 may accept an input of an instruction from a user via an input device 770 (such as an input button, a numeric keypad, and a touch panel), and in accordance with the instruction, the CPU 740 can develop a program stored in the non-volatile memory 760 in a RAM (Random Access Memory) 750 and execute the program. Further, the CPU 740 can develop and execute an application stored in the non-volatile memory 760 in the RAM 750 in accordance with the instruction from the user, and can start or finish communication.

The mobile station 100 may have a hardware configuration capable of acquiring position information. However, there is no limitation on the way in which the mobile station 100 acquires the position information. For example, the mobile station 100 may acquire position information by mounting thereon a device such as a GPS receiver, or may also estimate the position of the mobile station 100 by a method of specifying a position by using a signal of a cellular radio communication system (e.g., see JP-W-2004-532576), a method of specifying the position by using base station identification information included in a radio signal transmitted from the base station 200, or by a combination of those methods. The mobile station 100 can obtain position information at the present moment by using position information acquisition means.

### [1-4. Functional configuration of mobile station]

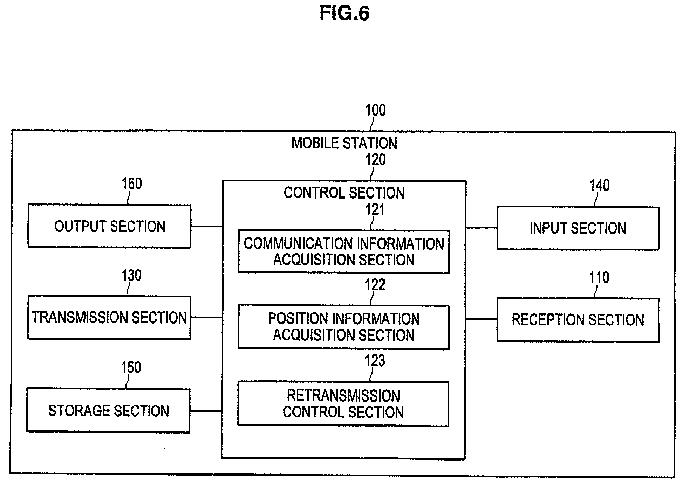

FIG. 6 is a diagram showing a functional configuration of the mobile station according to the embodiment. With reference to FIG. 6, the functional configuration of the mobile station according to the present embodiment will be described. As shown in FIG. 6, the mobile station 100 includes a reception section 110, a control section 120, a transmission section 130, an input section 140, a storage section 150, an output section 160, and the like.

The reception section 110 has a function of receiving a radio signal from the base station 200. The reception section 110 has an antenna, for example, and the antenna included in the reception section 110 may be identical to or different from an antenna included in the transmission section 130.

The control section 120 includes a communication information acquisition section 121, a position information acquisition section 122, a retransmission control section 123, and the like. Further, the control section 120 has a function of controlling operation of each functional block that the mobile station 100 has. The control section 120 includes a CPU, for example, and the function thereof can be realized by developing a program stored in a non-volatile memory in a RAM by the CPU and executing the program developed in the RAM by the CPU.

The transmission section 130 has a function of transmitting a radio signal. The transmission section 130 has an antenna, for example, and the antenna included in the transmission section 130 may be identical to or different from the antenna included in the reception section 110.

The storage section 150 has a function of storing data. The hardware configuration of the storage section 150 is not particularly limited as long as it has a function of storing data, and storage section 150 has a non-volatile memory, for example.

The output section 160 has a function of outputting audio and image based on audio data and image data. The output section 160 has a speaker and a display device, for example.

The communication information acquisition section 121 has a function of acquiring, based on the radio signal received by the reception section 110, communication information which is information related to communication with the base station 200. It is assumed that there are various pieces of communication information. The communication information acquisition section 121 may measure communication quality of the communication with the base station 200 using a radio signal, and may acquire communication quality information indicating the measured communication quality as the communication information, for example. Further, the communication information acquisition section 121 may extract frequency channel information indicating a frequency channel used for the communication with the base station 200 from the radio signal received by the reception section 110, and may acquire the extracted frequency channel information as the communication information, for example.

The position information acquisition section 122 has a function of acquiring position information indicating the position of the mobile station device. As described above, there is no limitation on the way in which the position information is acquired. For example, the position information acquisition section 122 may acquire position information by mounting thereon a device such as a GPS receiver, or may also estimate the position of the mobile station 100 by a method of specifying a position by using a signal of a cellular radio communication system, a method of specifying the position by using base station identification information included in a radio signal transmitted from the base station 200, or by a combination of those methods. The transmission section 130 transmits the position information acquired by the position information acquisition section 122 and the communication information acquired by the communication information acquisition section 121 to the base station 200 using a radio signal.

In the case where it is determined that the communication quality information is higher than a threshold, the communication information acquisition section 121 may not acquire the communication quality information as the communication information, and the transmission section 130 may not transmit the position information and the communication information to the base station 200 using a radio signal.

It is assumed that there are various communication qualities. For example, the communication information acquisition section 121 may measure, as the communication quality, a received power strength of a radio signal which is received from the base station 200 by the reception section 110 or a signal-to-interference-noise ratio of the radio signal. Further, the communication information acquisition section 121 may also acquire a data amount contained in a radio signal received from the base station 200 by the reception section 110 and a time at which the radio signal is received, may calculate, based on the acquired data amount and the time, a data amount every predetermined hour as a reception average throughput, and may measure the calculated reception average throughput as the communication quality.

The communication quality information may be input by the user who actually talks on the phone. The input section 140 has a function of accepting input of the communication quality information from the user. The communication information acquisition section 121 may acquire the communication quality information as the communication information, the input of the communication quality information from the user being accepted by the input section 140.

There may be a case where it is difficult for the transmission section 130 to transmit the position information and the communication information by using a radio signal. In this case, the retransmission control section 123 causes the storage section 150 to store the position information and the communication information, and, when it is detected that the communication with the base station 200 becomes possible, the retransmission control section 123 may acquire the position information and the communication information from the storage section 150. The transmission section 130 transmits the position information and the communication information acquired by the retransmission control section 123 to the base station 200 using a radio signal.

The communication information acquisition section 121 may measure, as the communication quality, the received power strength of a radio signal which is received from the base station 200 by the reception section 110 or the signal-to-interference-noise ratio of the radio signal, and may further acquire communication quality information indicating the measured communication quality. In this case, the transmission section 130 may further transmit the communication quality information to the base station 200 using a radio signal.

The position information and the communication quality information transmitted to the base station 200 by the transmission section 130 may also be transmitted to a data management device 400 by the base station 200 via a network 40. In this case, for example, the position information and the communication quality information may be used for the data management device 400 to specify a position at which the communication quality is poor based on pieces of the position information and pieces of the communication quality information transmitted from multiple base stations 200.

In the case where the mobile station 100 adds mobile station identification information, which is information for identifying the mobile station 100, to at least one of the position information and the communication information and transmits the position information and the communication information to the base station 200, the mobile station identification information may be deleted by the base station 200 and then the position information and the communication information may be transmitted to the data management device 400.

Further, as will be described later, the service provider can encourage the users to provide information by giving incentive such as discounting communication charge to the user who carries the mobile station 100 from which communication information is reported. That is, in the case where the transmission section 130 transmits the position information and the communication information to the base station 200 using a radio signal, a charge imposed on a user of the mobile station 100 for the communication between the mobile station 100 and the base station 200 using a radio signal may be reduced. Further, the calculation and reduction of the charge may be performed by a charge calculation device.

The position information and the communication quality information transmitted to the base station 200 by the transmission section 130 may also be transmitted by the base station 200 to the data management device 400 via the network 40. In this case, the data management device 400 may specify, based on pieces of position information and pieces of frequency channel information transmitted from multiple base stations 200, a position at which a radio signal transmitted from the base station 200 is received for each of the pieces of frequency channel information.

### [1-5. Hardware configuration of base station]

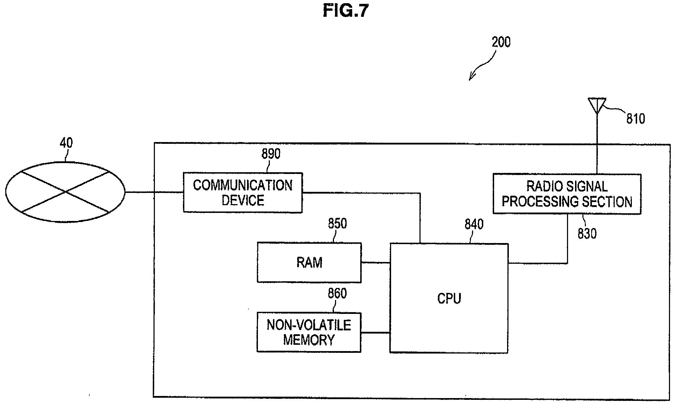

FIG 7 is a diagram showing a hardware configuration of the base station according to the embodiment. With reference to FIG. 7, the hardware configuration of the base station according to the present embodiment will be described. The base station 200 includes a radio signal processing section 830. The radio signal processing section 830 is a module for performing signal processing for communicating with the mobile station 100. The signal processed by the module is transmitted to/received from the mobile station 100, which is a communication partner, via an antenna 810.

The base station 200 includes a RAM 850, a non-volatile memory 860, and the like. The base station 200 further includes a CPU 840, and the CPU 840 can develop a program stored in the non-volatile memory 860 in a RAM 850 and execute the program.

The base station 200 further includes a communication device 890. The communication device 890 is connected to a network 40, and the communication device 890 is capable of communicating with the data management device 400 via the network 40. In addition, the communication device 890 can communicate with another device which is connected to the network 40 via the network 40.

### [1-6. Functional configuration of base station]

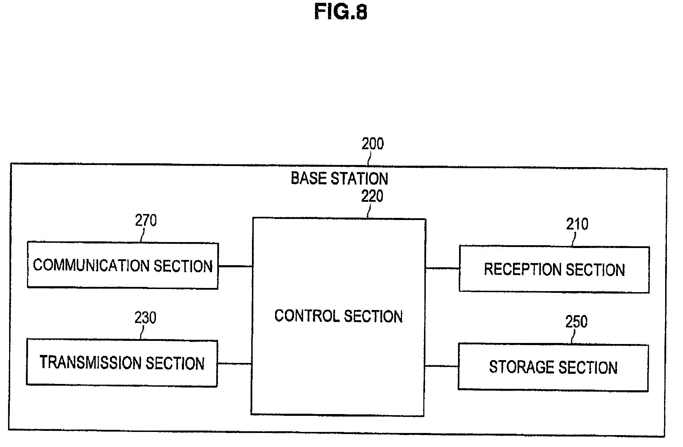

FIG. 8 is a diagram showing a functional configuration of the base station according to the embodiment. With reference to FIG. 8, the functional configuration of the base station according to the embodiment will be described. As shown in FIG. 8, the base station 200 includes a reception section 210, a control section 220, a transmission section 230, a storage section 250, a communication section 270, and the like.

The reception section 210 has a function of receiving the position information and the communication information from the mobile station 100 using a radio signal. The reception section 210 has an antenna, for example, and the antenna included in the reception section 210 may be identical to or different from an antenna included in the transmission section 230.

The control section 220 has functions of acquiring the position information and the communication information from the radio signal received by the reception section 210 and outputting the acquired position information and communication information to the communication section 270. The control section 220 has a function of controlling operation of each functional block that the base station 200 has. The control section 220 includes a CPU, for example, and the function thereof can be realized by developing a program stored in a non-volatile memory in a RAM by the CPU and executing the program developed in the RAM by the CPU.

The transmission section 230 has a function of transmitting a radio signal to the mobile station 100. The transmission section 230 has an antenna, for example, and the antenna included in the transmission section 230 may be identical to or different from the antenna included in the reception section 210.

The storage section 250 has a function of storing data. The storage section 250 has a non-volatile memory, for example.

The communication section 270 has a function of communicating with another device which is connected to the network 40 via the network 40. The communication section 270 transmits the position information and the communication information output from the control section 220 to the data management device 400 via a network. The communication section 270 has a communication device, for example.

### [1-7. Processing in mobile station (measurement and notification of communication quality)]

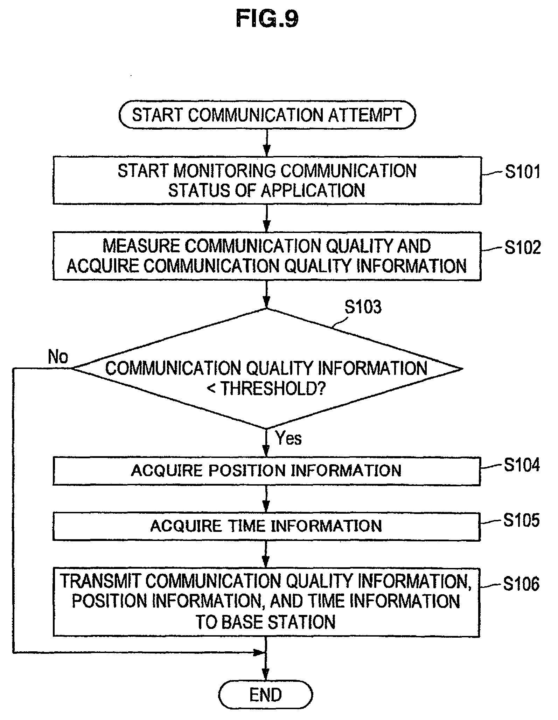

FIG. 9 is a flowchart showing a flow of processing executed by the mobile station according to the embodiment. With reference to FIG. 9, the flow of processing executed by the mobile station 100 will be described. When the mobile station 100 activates an application or the like and communication is attempted, monitoring of a communication status of the application is started (Step S101). The monitoring may be performed by a radio communication procedure or the CPU 740. As items of the communication qualities to be monitored, there can be considered the following items (1) to (7):
(1) a reception strength or reception SINR of a transmission signal from the base station 200;
(2) a transmission rate used for communication with the base station 200;
(3) a transmission buffer amount (transmission-queue data amount) of the mobile station 100;
(4) a flow rate of data transmitted from the mobile station 100 (average transmission throughput);
(5) a flow rate of data transmitted from the base station 200 (average reception throughput);
(6) a time period during which a waiting state of an application task corresponds to communication waiting state (corresponding to a time period during which data transmission being a bottleneck; and
(7) a number of times which buffer underflow occurs in the application (corresponding to the number of times a trouble is caused in the application).

When the application is activated, the measurements of the communication qualities are performed (monitoring of the communication status is continued), and when the communication is terminated by the application being terminated or the like, the quality of the communication is aggregated and communication quality information is acquired (Step S102). Note that there is also a case where the application is terminated by force-quit command performed by a user. The session disconnection becomes a trigger for the aggregate of the communication quality, for example.

After that, the mobile station 100 compares the acquired communication quality information (aggregated communication quality) with a predetermined threshold, and in the case where the communication quality is less than the threshold ("Yes" in Step S103), the mobile station 100 determines that the communication quality at that location is inadequate and acquires position information (Step S104); acquires time information at the present moment (Step S105); and gathers measurement results of the measured communication qualities as data, adds the measurement results to the position information and the time information, and notifies the base station 200 of the results as the measurement results (Step S106). Here, although there is described an example in which the notification of the communication quality information is performed only when the communication quality is inadequate, there is also a case where the notification of the communication quality information is performed every session regardless of whether or not the communication quality is adequate. There is a case where the start time and the end time of the session is recorded in the time information. The time information is used when the data is aggregated in the data management device 400, for example.

In the description above, it is considered the case where the mobile station 100 can communicate with the base station 200 when the mobile station 100 activates the application, but there can be also considered a case where the mobile station 100 is at a location where it cannot capture the radio wave of the base station 200. In that case, the information cannot be passed on to the base station 200 immediately. In this way, in the case where the mobile station 100 cannot establish a communication link with the base station 200 even though the mobile station 100 attempts to notify measurement results to the base station 200, the mobile station 100 may record the measurement results and, when the state thereof moves to the one that can establish the communication link with the base station 200, may notify the base station 200 of the recorded measurement results.

In this manner, by notifying the base station 200 side of the communication quality information measured in the mobile station 100, it becomes possible for the base station 200 side to automatically obtain the information about which location it is recognized that the communication quality is poor.

### [1-8. Other example of processing in mobile station]

In the description above, whether or not the communication quality is adequate is determined by the result of comparison between one of the parameters shown in items (1) to (7) and a predetermined threshold (Step S103). In addition, a determination criterion to determine whether or not a desired communication quality is satisfied may be that based on input from the user in response to the question from the mobile station 100 to the user of whether or not the communication quality is satisfactory. In this case, at the end of a session, the mobile station 100 performs display or the like for inquiring the user whether or not the session was satisfactory from the output device 780. In response thereto, a satisfaction level of the communication quality considered by the user is input by the user from the input device 770. The satisfaction level may be adopted as communication quality information, and may be notified to the base station 200 as a measurement result in the same manner as described above.

Still further, the communication quality information may be transmitted to the base station 200, not the result of comparing the communication quality information with the threshold, and not based on whether or not the measured quality is good. In that case, the processing of comparing the communication quality information and the threshold can be omitted. The base station 200 may be capable of instructing, to the mobile station 100, which of the following is to be transmitted to the base station 200: the result of comparing the communication quality information with the threshold; the communication quality information input by the user; and the communication quality information obtained as a measurement result.

### [1-9. Description on session]

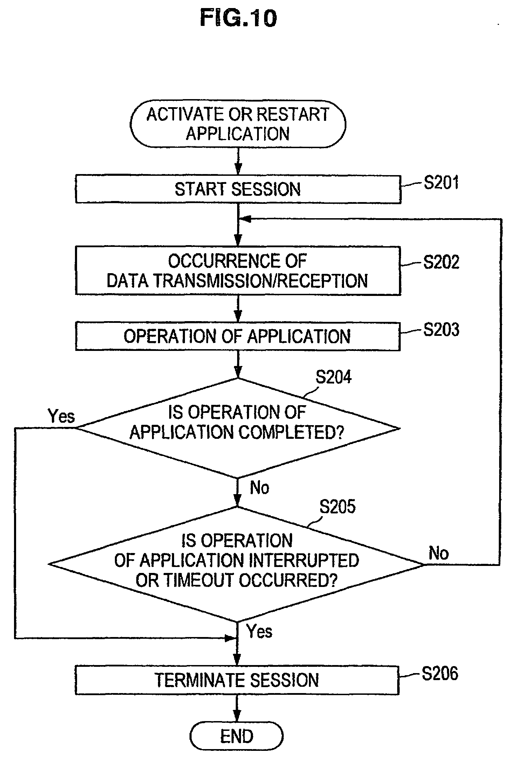

FIG. 10 is a flowchart showing a flow of processing from the start to the end of a session. With reference to FIG. 10, the flow of processing from the start to the end of a session will be described.

The session shown in the description above starts by the activation or restart of an application and terminates by the completion or interruption of the application. When the application is activated, first, the session related to the application is started (established) (Step S201). In the established session, transmission/reception of desired application data is performed (Step S202), and the application operates based on the obtained data (Step S203).

When the operation of the application is already completed here ("Yes" in Step S204), the session related to the application is closed and terminated (Step S206). On the other hand, in the case where the operation of the application is not completed ("No" in Step S204), as long as interruption or timeout of the application does not occur ("No" in Step S205), the transfer of data (Step S202) and the operation of the application (Step S203) are repeated. On the other hand, in the case where interruption or timeout of the application occurs ("Yes" in Step S205), the session is once closed and terminated, even though the application itself is not terminated (Step S206).

### [1-10. Processing in mobile station (measurement and notification of frequency channel in use)]

When the mobile station 100 activates monitoring a communication status of an application, there may be a case where, in addition to the processing described above, the mobile station 100 extracts information on a frequency resource which is used at that location and performs the notification thereof as a part of the communication quality information.

As described above with reference to FIG. 2 and the like, in a cellular system, base stations 200 placed adjacently to each other use different frequency channels, but there is a case where intercell interference occurs because the base station 200 can sometimes receive a signal of a base station 200 of farther away. In the present embodiment, with the monitoring of the communication status, whether or not the intercell interference occurs is also determined.

While maintaining the communication state with a base station 200, which is a communication partner, the mobile station 100 attempts to receive a synchronization signal of another base station 200 and confirms the presence of a nearby base station 200. Each base station 200 transmits a synchronization signal for notifying timing information of the base station 200, and hence, in the case where the base station 200 is present within an area that the mobile station 100 can receive the signal, the mobile station 100 can discover the base station 200. In the case where the mobile station 100 could receive the synchronization signal of the nearby base station 200, the mobile station 100 decodes various control signals transmitted at a predetermined time on the basis of the synchronization signal and obtains frequency channel information that the base station 200 uses. Further, the mobile station 100 extracts a signal (e.g., a synchronization signal or a control signal) that can be specified to be transmitted from a specific nearby base station 200 from among reception signals, and measures the received power strength of the signal transmitted from the base station 200.

When the mobile station 100 transmits the communication quality information to the base station 200 based on the procedure shown in FIG. 9, the mobile station 100 notifies the base station 200 of the communication quality information by adding thereto the frequency channel information that the nearby base station 200 uses and the received power strength from the base station 200 which are obtained by the procedure described above. By transmitting the information to the base station 200, it becomes possible for the base station 200 side to automatically obtain information on which location a signal of the nearby base station 200 (or a relay station 300 to be described later) is received at and which location may become an interference source.

### [1-11. Processing in network side (aggregate of communication quality)]

When the communication quality information is transmitted from the mobile station 100 to the base station 200 by the procedure described above, the base station 200 processes the data in order to aggregate the pieces of information notified by multiple mobile stations 100.

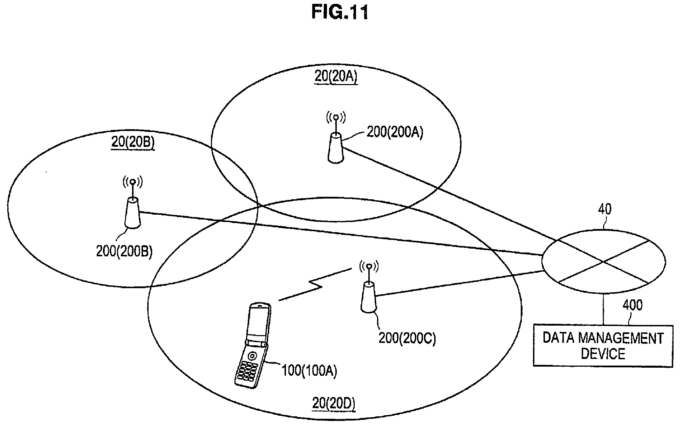

As shown in FIG. 11, the base station 200 is connected to the data management device 400 which gathers communication quality information, and the data management device 400 aggregates the pieces of communication quality information which are gathered from multiple base stations 200 and are notified by an unspecified number of mobile stations 100. The aggregate is performed by using the location information included in the communication quality information as an index, and brings together mainly at which location the communication quality of the user tends to be poor. Based on the information, a service provider determines where to place hereafter a new base station 200 (or the relay station 300 to be described later, which may be referred to as base station 200 for the purpose of simplifying the description, but includes the relay station 300), and a base station 200 is newly installed as necessary.

Note that, in the case where a new base station 200 is installed or in the case where transmission power in the base station 200 or a frequency bandwidth used in the base station 200 is changed, the aggregate of the communication quality information at the location belonging to the area which the base station 200 is responsible for is reset, and then the aggregate of communication quality in a new cell configuration is newly started.

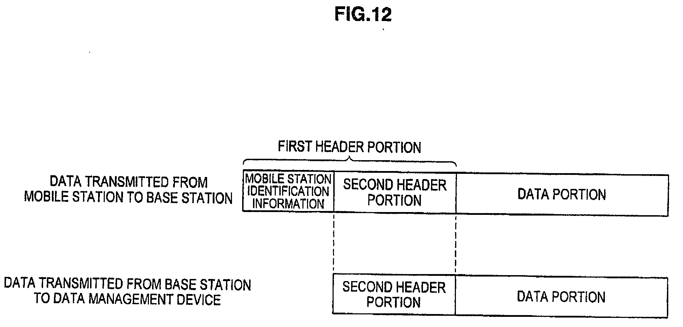

As shown in FIG. 12, in the case where the communication quality information exchanged between the mobile station 100 and the base station 200 is packetized, a first header portion is added to a data portion (communication quality information), and in the header there is included a code for identifying the mobile station 100 (mobile station identification information). Before transferring the information to the data management device 400, the base station 200 generates new header information (second header portion) by eliminating the mobile station identification information from the first header portion. The base station 200 transfers, to the data management device 400, the information in the state in which the second header portion is added to the data portion (communication quality information). In this manner, it becomes difficult to identify a mobile station 100 or a user from the communication quality information transferred to the data management device 400, and hence, it is prevented from being identified that which mobile station 100 was at which place and at what time.

### [1-12. Processing in network side (measurement and notification of frequency channel in use)]

In the case where the frequency channel information that the nearby base station 200 uses and the received power strength information from the base station 200 are included in the communication quality information reported by the mobile station 100, the data management device 400 similarly aggregates the utilization status of the frequency channel notified by the unspecified number of mobile stations 100 and gathers information about at which location the frequency channel in use is recognized by the mobile station 100. Based on the information, which frequency channel is to be used for which base station 200 can be determined, and the frequency channel to be used for the base station 200 may be changed as necessary.

Note that, in the case where a new base station 200 is installed or in the case where transmission power in the base station 200 or a frequency bandwidth used in the base station 200 is changed, the aggregate information at the location belonging to the area which the base station 200 is responsible for is reset, and then the aggregate of communication quality in a new cell configuration is newly started.

### [1-13. Link with charging]

The report of the communication quality information (or frequency channel information) is very important information for a service provider, and the service provider hopes to collect information from the mobile stations 100 as widely as possible. However, depending on the user of the mobile station 100, there may be someone who does not want to perform the report. Accordingly, the service provider can encourage the users to provide the information by giving incentive such as discounting communication charge to the user carrying the mobile station 100 that reports the communication quality information (or frequency channel information). That is, depending on the mobile stations 100, there are those which perform notification of the communication quality information (or frequency channel information) and those which do not, and for the mobile station 100 which performs notification of the communication quality information (or frequency channel information), the charge for the connection to the base station 200 is discounted. There should be considered a form in which the discount is applicable for each notification. Further, it is also possible to provide a charge calculation device for calculating the charge.

In addition, there is also a case where multiple thresholds, which are used for the determination in Step S103 shown in FIG. 9, are prepared, and the threshold used for the determination is changed depending on a user's price plan. In this case, it is biased in such a manner that the more expensive the price plan, the higher the threshold is set, and the quality is determined to be insufficient when the communication is not performed with higher throughput.

### <2. Modified example>

It should be understood by those skilled in the art that various modifications, combinations, sub-combinations and alterations may occur depending on design requirements and other factors insofar as they are within the scope of the appended claims or the equivalents thereof.

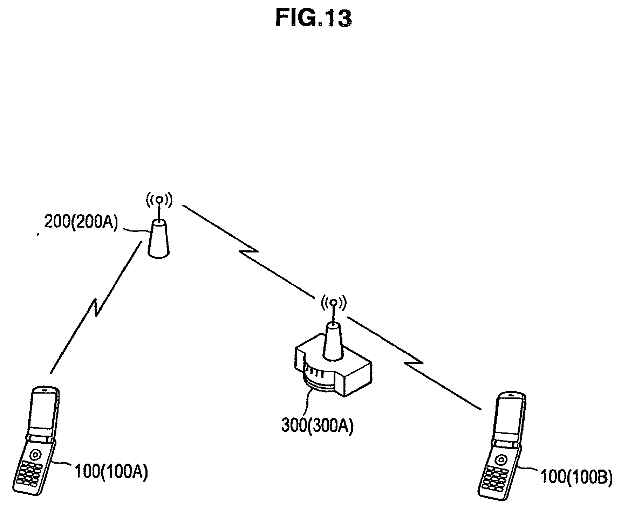

For example, although the description is made of the case where the mobile station 100 of the radio communication system 1 only communicates with the base station 200, a radio communication system 1 considered in the present embodiment is not limited thereto, and the similar method is used in the case where a relay station 300 is installed for the purpose of extending a service area 20 covered by the base station 200. With reference to FIG. 13, a configuration in which the relay station 300 is present will be described.

A base station 200A connects to and provides a communication path to any mobile station 100A, and at the same time, the base station 200A also connects to and provides a communication path to a relay station 300A. The relay station 300A may operate as an endpoint of a communication session, and in addition thereto, connects to and provides a communication path to a mobile station 100B which is another mobile station from the mobile station 100A. In such configuration, the mobile station 100B can communicate with the base station 200A via the relay station 300A. In this case, the relay station 300A behaves as if itself is the base station 200A with respect to the mobile station 100B, and transmits a synchronization signal, a control signal, and the like that the base station 200A transits. By receiving the signal, the mobile station 100B recognizes the relay station 300A as the base station 200 and establishes a communication path.

Therefore, in the radio communication system 1 in which the relay station 300 is mediated, the similar effect can be expected even when the "base station 200" described in the present embodiment is replaced with the "relay station 300".

### <3. Summary>

According to the present embodiment, it becomes possible to extract efficiently and automatically information on a location where a user carrying a mobile station device is dissatisfied with a service. In addition, by aggregating the information, it enables a service provider to investigate with less effort where to arrange a new base station for improving service quality.

The present application contains subject matter related to that disclosed in Japanese Priority Patent Application JP 2009-210990 filed in the Japan Patent Office on September 11, 2009

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A mobile station device (100) operable to transmit data in a wireless communication network, the network including at least said mobile station device (100), a relay station (300) and a base station (200), the mobile station device (100) comprising:
a reception section (110) which receives a radio signal from a relay station device (300);
a communication information acquisition section (121) which acquires, based on the radio signal received by the reception section, communication information which is information related to communication with the relay station device (300);
a position information acquisition section (122) which acquires position information indicating a position of the mobile station device; and
a transmission section (130) which transmits the position information acquired by the position information acquisition section and the communication information acquired by the communication information acquisition section to the relay station device (300) using a radio signal;
wherein the communication information acquisition section measures communication quality of communication with the relay station device (300) using a radio signal, and acquires communication quality information indicating the measured communication quality as the communication information; and
wherein the communication information acquisition section acquires a data amount contained in a radio signal received from the relay station device (300) by the reception section and a time at which the radio signal is received, calculates, based on the acquired data amount and the acquired time, a reception average throughput, and measures the calculated reception average throughput as the communication quality.

2. The mobile station device according to claim I,
wherein the communication information acquisition section (121) measures, as the communication quality, a received power strength of a radio signal which is received from the relay station device (300) by the reception section (110) or a signal-to-interference-noise ratio of the radio signal.

3. The mobile station device according to claim 1, further comprising
an input section (140) which accepts input of communication quality information from a user,
wherein the communication information acquisition section (121) acquires the communication quality information as the communication information, the input of the communication quality information from the user being accepted by the input section.

4. The mobile station device according to claim 1,
wherein the position information and the communication quality information transmitted to the relay station device (300) by the transmission section (130) are transmitted to a data management device (400) by the relay station device, and are used for the data management device to specify a position at which the communication quality is poor based on pieces of the position information and pieces of the communication quality information transmitted from a plurality of the relay station devices.

5. A relay station device (300) comprising:
a transmission section (230) which transmits a radio signal to a mobile station device (100); and
a reception section (210) which, from a mobile station device including a reception section (110) which receives the radio signal from the relay station device (300), a communication information acquisition section (121) which acquires, based on the radio signal received by the reception section, communication information which is information related to communication with the relay station device, a position information acquisition section (122) which acquires position information indicating a position of the mobile station device, and a transmission section (130) which transmits the position information acquired by the position information acquisition section and the communication information acquired by the communication information acquisition section to the relay station device using a radio signal, wherein the communication information acquisition section measures communication quality of communication with the relay station device using a radio signal, and acquires communication quality information indicating the measured communication quality as the communication information, and wherein the communication information acquisition section acquires a data amount contained in a radio signal received from the relay station device (300) by the reception section and a time at which the radio signal is received, calculates, based on the acquired data amount and the acquired time, a reception average throughput, and measures the calculated reception average throughput as the communication quality, receives the position information and the communication information using the radio signal.

6. A radio communication system comprising:
a relay station device (300); and
a mobile station device (100),
wherein the mobile station device includes
a reception section (110) which receives a radio signal from the relay station device,
a communication information acquisition section (121) which acquires, based on the radio signal received by the reception section, communication information which is information related to communication with the relay station device,
a position information acquisition section (122) which acquires position information indicating a position of the mobile station device, and
a transmission section (130) which transmits the position information acquired by the position information acquisition section and the communication information acquired by the communication information acquisition section to the relay station device using a radio signal,
wherein the communication information acquisition section measures communication quality of communication with the relay station device (300) using a radio signal, and acquires communication quality information indicating the measured communication quality as the communication information; and
wherein the communication information acquisition section acquires a data amount contained in a radio signal received from the relay station device (300) by the reception section and a time at which the radio signal is received, calculates, based on the acquired data amount and the acquired time, a reception average throughput, and measures the calculated reception average throughput as the communication quality, and
wherein the base station device includes
a transmission section (230) which transmits a radio signal to the mobile station device and
a reception section (210) which receives the position information and the communication information from the mobile station device using a radio signal.

## Patentansprüche

1. Mobilstationsvorrichtung (100), betriebsfähig zum Übertragen von Daten in einem drahtlosen Kommunikationsnetzwerk, wobei das Netzwerk mindestens die Mobilstationsvorrichtung (100), eine Relaisstation (300) und eine Basisstation (200) enthält, die Mobilstationsvorrichtung (100) umfassend:
einen Empfangsabschnitt (110), der ein Funksignal von einer Relaisstationsvorrichtung (300) empfängt;
einen Kommunikationsinformationen-Erfassungsabschnitt (121), der basierend auf dem von dem Empfangsabschnitt empfangenen Funksignal Kommunikationsinformationen, die Informationen bezüglich der Kommunikation mit der Relaisstationsvorrichtung (300) sind, erfasst;
einen Positionsinformationen-Erfassungsabschnitt (122), der Positionsinformationen erfasst, die eine Position der Mobilstationsvorrichtung angeben; und
einen Übertragungsabschnitt (130), der die von dem Positionsinformationen-Erfassungsabschnitt erfassten Positionsinformationen und die von dem Kommunikationsinformationen-Erfassungsabschnitt erfassten Kommunikationsinformationen unter Verwendung eines Funksignals an die Relaisstationsvorrichtung (300) überträgt;
wobei der Kommunikationsinformationen-Erfassungsabschnitt eine Kommunikationsqualität der Kommunikation mit der Relaisstationsvorrichtung (300) unter Verwendung eines Funksignals misst und Kommunikationsqualität-Informationen, die die gemessene Kommunikationsqualität angeben, als die Kommunikationsinformationen erfasst; und
wobei der Kommunikationsinformationen-Erfassungsabschnitt eine Datenmenge, enthalten in einem Funksignal, das von der Relaisstationsvorrichtung (300) durch den Empfangsabschnitt empfangen wird, und eine Zeit, zu der das Funksignal empfangen wird, erfasst, basierend auf der erfassten Datenmenge und der erfassten Zeit einen durchschnittlichen Empfangsdurchsatz berechnet und den berechneten durchschnittlichen Empfangsdurchsatz als die Kommunikationsqualität misst.

2. Mobilstationsvorrichtung nach Anspruch 1,
wobei der Kommunikationsinformationen-Erfassungsabschnitt (121) eine empfangene Leistungsstärke eines Funksignals, das von der Relaisstationsvorrichtung (300) durch den Empfangsabschnitt (110) empfangen wird, oder ein Signal-zu-Störleistung-Verhältnis des Funksignals als die Kommunikationsqualität misst.

3. Mobilstationsvorrichtung nach Anspruch 1, ferner umfassend
einen Eingabeabschnitt (140), der Eingabe von Kommunikationsqualitätsinformationen von einem Benutzer annimmt,
wobei der Kommunikationsinformationen-Erfassungsabschnitt (121) die Kommunikationsqualitätsinformationen als die Kommunikationsinformationen erfasst, wobei die Eingabe der Kommunikationsqualitätsinformationen von dem Benutzer durch den Eingabeabschnitt angenommen werden.

4. Mobilstationsvorrichtung nach Anspruch 1,
wobei die Positionsinformationen und die Kommunikationsqualitätsinformationen, die zur Relaisstationsvorrichtung (300) durch den Übertragungsabschnitt (130) übertragen werden, durch die Relaisstationsvorrichtung zu einer Datenverwaltungsvorrichtung (400) übertragen werden und für die Datenverwaltungsvorrichtung zum Spezifizieren einer Position verwendet werden, an der die Kommunikationsqualität basierend auf Teilen der Positionsinformationen und Teilen der Kommunikationsqualitätsinformationen, die von einer Vielzahl der Relaisstationsvorrichtungen übertragen werden, schlecht ist.

5. Relaisstationsvorrichtung (300), umfassend:
einen Übertragungsabschnitt (230), der ein Funksignal an eine Mobilstationsvorrichtung (100) überträgt; und
einen Empfangsabschnitt (210), der von einer Mobilstationsvorrichtung, die einen Empfangsabschnitt (110), der das Funksignal von der Relaisstationsvorrichtung (300) empfängt, einen Kommunikationsinformationen-Erfassungsabschnitt (121), der basierend auf dem von dem Empfangsabschnitt empfangenen Funksignal Kommunikationsinformationen erfasst, die Informationen in Bezug auf Kommunikation mit der Relaisstationsvorrichtung sind, einen Positionsinformationen-Erfassungsabschnitt (122), der Positionsinformationen erfasst, die eine Position der Mobilstationsvorrichtung angeben, und einen Übertragungsabschnitt (130), der die von dem Positionsinformationen-Erfassungsabschnitt erfassten Positionsinformationen und die von dem Kommunikationsinformationen-Erfassungsabschnitt erfassten Kommunikationsinformationen unter Verwendung eines Funksignals an die Relaisstationsvorrichtung überträgt, enthält, wobei der Kommunikationsinformationen-Erfassungsabschnitt eine Kommunikationsqualität einer Kommunikation mit der Relaisstationsvorrichtung unter Verwendung eines Funksignals misst und Kommunikationsqualitätsinformationen erfasst, die die gemessene Kommunikationsqualität als die Kommunikationsinformationen angeben, und wobei der Kommunikationsinformationen-Erfassungsabschnitt eine Datenmenge, die in einem durch den Empfangsabschnitt von der Relaisstationsvorrichtung (300) empfangenen Funksignal enthalten ist, und eine Zeit, zu der das Funksignal empfangen wird, erfasst, einen durchschnittlichen Empfangsdurchsatz basierend auf der erfassten Datenmenge und der erfassten Zeit berechnet und den berechneten durchschnittlichen Empfangsdurchsatz als die Kommunikationsqualität misst, die Positionsinformationen und die Kommunikationsinformationen unter Verwendung des Funksignals empfängt.

6. Funkkommunikationssystem, umfassend:
eine Relaisstationsvorrichtung (300); und
eine Mobilstationsvorrichtung (100),
wobei die Mobilstationsvorrichtung Folgendes enthält
einen Empfangsabschnitt (110), der ein Funksignal von der Relaisstationsvorrichtung empfängt;
einen Kommunikationsinformationen-Erfassungsabschnitt (121), der basierend auf dem von dem Empfangsabschnitt empfangenen Funksignal Kommunikationsinformationen, die Informationen bezüglich der Kommunikation mit der Relaisstationsvorrichtung sind, erfasst;
einen Positionsinformationen-Erfassungsabschnitt (122), der Positionsinformationen erfasst, die eine Position der Mobilstationsvorrichtung angeben; und
einen Übertragungsabschnitt (130), der die von dem Positionsinformationen-Erfassungsabschnitt erfassten Positionsinformationen und die von dem Kommunikationsinformationen-Erfassungsabschnitt erfassten Kommunikationsinformationen unter Verwendung eines Funksignals an die Relaisstationsvorrichtung überträgt;
wobei der Kommunikationsinformationen-Erfassungsabschnitt eine Kommunikationsqualität der Kommunikation mit der Relaisstationsvorrichtung (300) unter Verwendung eines Funksignals misst und Kommunikationsqualitätsinformationen, die die gemessene Kommunikationsqualität angeben, als die Kommunikationsinformationen erfasst; und
wobei der Kommunikationsinformationen-Erfassungsabschnitt eine Datenmenge, enthalten in einem Funksignal, das von der Relaisstationsvorrichtung (300) durch den Empfangsabschnitt empfangen wird, und eine Zeit, zu der das Funksignal empfangen wird, erfasst, basierend auf der erfassten Datenmenge und der erfassten Zeit einen durchschnittlichen Empfangsdurchsatz berechnet und den berechneten durchschnittlichen Empfangsdurchsatz als die Kommunikationsqualität misst, und
wobei die Basisstationsvorrichtung Folgendes enthält
einen Übertragungsabschnitt (230), der ein Funksignal an die Mobilstationsvorrichtung überträgt, und
einen Empfangsabschnitt (210), der die Positionsinformationen und die Kommunikationsinformationen von der Mobilstationsvorrichtung unter Verwendung eines Funksignals empfängt.

## Revendications

1. Dispositif de station mobile (100) pouvant fonctionner pour transmettre des données dans un réseau de communication sans fil, le réseau comprenant au moins ledit dispositif de station mobile (100), une station de relais (300) et une station de base (200), le dispositif de station mobile (100) comprenant :
une section de réception (110) qui reçoit un signal radio à partir d'un dispositif de station de relais (300);
une section d'acquisition d'informations de communication (121) qui acquiert, à partir du signal radio reçu par la section de réception, des informations de communication qui sont des informations relatives à la communication avec le dispositif de station de relais (300);
une section d'acquisition d'informations de position (122) qui acquiert des informations de position indiquant une position du dispositif de station mobile; et
une section de transmission (130) qui transmet les informations de position acquises par la section d'acquisition d'informations de position et les informations de communication acquises par la section d'acquisition d'informations de communication au dispositif de station de relais (300) en utilisant un signal radio;
dans lequel la section d'acquisition d'informations de communication mesure la qualité de communication de la communication avec le dispositif de station de relais (300) en utilisant un signal radio, et acquiert des informations de qualité de communication indiquant la qualité de communication mesurée par les informations de communication; et
dans lequel la section d'acquisition d'informations de communication acquiert une quantité de données contenue dans un signal radio reçu à partir du dispositif de station de relais (300) par la section de réception et un instant auquel le signal radio est reçu, calcule, en fonction de la quantité de données acquise et de l'instant acquis, un débit moyen de réception, et mesure le débit moyen de réception calculé en tant que la qualité de communication.

2. Dispositif de station mobile selon la revendication 1,
dans lequel la section d'acquisition d'informations de communication (121) mesure, en tant que la qualité de communication, une intensité reçue d'un signal radio qui est reçu à partir du dispositif de station de relais (300) par la section de réception (110) ou un rapport signal/brouillage + bruit du signal radio.

3. Dispositif de station mobile selon la revendication 1, comprenant en outre
une section d'entrée (140) qui accepte l'entrée d'informations de qualité de communication par un utilisateur,
dans lequel la section d'acquisition d'informations de communication (121) acquiert les informations de qualité de communication en tant que les informations de communication, l'entrée des informations de qualité de communication par l'utilisateur étant acceptée par la section d'entrée.

4. Dispositif de station mobile selon la revendication 1,
dans lequel les informations de position et les informations de qualité de communication transmises au dispositif de station de relais (300) par la section de transmission (130) sont transmises à un dispositif de gestion de données (400) par le dispositif de station de relais, et sont utilisées pour le dispositif de gestion de données pour spécifier une position à laquelle la qualité de communication est mauvaise sur la base d'éléments des informations de position et d'éléments des informations de qualité de communication transmises à partir d'une pluralité de dispositifs de station de relais.

5. Dispositif de station de relais (300), comprenant :
une section de transmission (230) qui transmet un signal radio à un dispositif de station mobile (100); et
une section de réception (210) qui, à partir d'un dispositif de station mobile comprenant une section de réception (110), reçoit le signal radio à partir du dispositif de station de relais (300), une section d'acquisition d'informations de communication (121) qui acquiert, sur la base du signal radio reçu par la section de réception, des informations de communication qui sont des informations relatives à la communication avec le dispositif de station de relais, une section d'acquisition d'informations de position (122) qui acquiert des informations de position indiquant une position du dispositif de station mobile, et une section de transmission (130) qui transmet les informations de position acquises par la section d'acquisition d'informations de position et les informations de communication acquises par la section d'acquisition d'informations de communication au dispositif de station de relais en utilisant un signal radio, dans lequel la section d'acquisition d'informations de communication mesure la qualité de communication de la communication avec le dispositif de station relais en utilisant un signal radio, et acquiert des informations de qualité de communication indiquant la qualité de communication mesurée par les informations de communication, et dans lequel la section d'acquisition d'informations de communication acquiert une quantité de données contenue dans un signal radio reçu à partir du dispositif de station de relais (300) par la section de réception et un instant auquel le signal radio est reçu, calcule, sur la base de la quantité de données acquise et de l'instant acquis, un débit moyen de réception, et mesure le débit moyen de réception calculé en tant que la qualité de communication, et reçoit les informations de position et les informations de communication en utilisant le signal radio.

6. Système de communication radio comprenant :
un dispositif de station de relais (300); et
un dispositif de station mobile (100),
dans lequel le dispositif de station mobile comprend
une section de réception (110) qui reçoit un signal radio à partir du dispositif de station relais,
une section d'acquisition d'informations de communication (121) qui acquiert, à partir du signal radio reçu par la section de réception, des informations de communication qui sont des informations relatives à la communication avec le dispositif de station de relais;
une section d'acquisition d'informations de position (122) qui acquiert des informations de position indiquant une position du dispositif de station mobile, et
une section de transmission (130) qui transmet les informations de position acquises par la section d'acquisition d'informations de position et les informations de communication acquises par la section d'acquisition d'informations de communication au dispositif de station de relais en utilisant un signal radio,
dans lequel la section d'acquisition d'informations de communication mesure la qualité de communication de la communication avec le dispositif de station de relais (300) en utilisant un signal radio, et acquiert des informations de qualité de communication indiquant la qualité de communication mesurée par les informations de communication; et
dans lequel la section d'acquisition d'informations de communication acquiert une quantité de données contenue dans un signal radio reçu à partir du dispositif de station de relais (300) par la section de réception et un instant auquel le signal radio est reçu, calcule, en fonction de la quantité de données acquise et de l'instant acquis, un débit moyen de réception, et mesure le débit moyen de réception calculé en tant que la qualité de communication, et
dans lequel le dispositif de station de base comprend
une section de transmission (230) qui transmet un signal radio au dispositif de station mobile, et
une section de réception (210) qui reçoit les informations de position et les informations de communication à partir du dispositif de station mobile en utilisant un signal radio.
